# EUROPÄISCHE PATENTSCHRIFT

(11) **EP 4 095 025 B1**
(45) Veröffentlichungstag und Bekanntmachung des Hinweises auf die Patenterteilung: **01.11.2023**
(21) Anmeldenummer: 22185731.1
(22) Anmeldetag: 10.01.2020
(51) Int. Cl.: B62K 7/04, B62M 6/60

(54) **LASTENFAHRRAD**
CARGO BIKE
BICYCLETTE DE TRANSPORT

(30) Priorität: 15.01.2019 DE 202019000233 U; 04.06.2019 DE 202019103127 U
(43) Veröffentlichungstag der Anmeldung: 30.11.2022
(62) Teilanmeldung aus: 20700483.9
(73) Patentinhaber: RTI Sports GmbH, 56070 Koblenz (DE)
(72) Erfinder: ARNOLD, Franc, 56068 Koblenz (DE); GRAEVE, Arndt, 56072 Koblenz (DE); RASCHE, Johannes, 64285 Darmstadt (DE)
(74) Vertreter: dompatent von Kreisler Selting Werner - Partnerschaft von Patent- und Rechtsanwälten mbB

(56) Entgegenhaltungen:
- WO-A1-2018/225084
- DE-U1- 20 311 819
- Christian Kaufman: "Lastenräder", , 4. Mai 2018 (2018-05-04), XP055677684, Gefunden im Internet: URL:https://bikeboutique.bike/wp-content/u ploads/2018/05/lastenradvergleich2018-web. pdf [gefunden am 2020-03-18]

## Beschreibung

Die Erfindung betrifft ein Lastenfahrrad.

Zum Transport von Lasten wie Gütern oder auch Personen, und insbesondere Kindern ist eine Vielzahl unterschiedlich gestalteter Lastenfahrräder bekannt. Beispielsweise sind Lastenfahrräder bekannt, bei denen die Last bzw. ein die Last aufnehmender Lastenaufnahmebehälter zwischen einem Vorderrad und einem Hinterrad angeordnet ist. Hierbei kann es sich um ein einspuriges oder zweispuriges Lastenfahrrad handeln. Insbesondere sind hierbei Lastenfahrräder bekannt, bei denen ein Fahrradrahmen einen Hinterbau aufweist, der mit einem oder zwei Hinterräder verbunden ist. Ferner ist mit dem Fahrradrahmen ein Gabelelement verbunden, das üblicherweise ein Vorderrad trägt. Des Weiteren weist der Fahrradrahmen üblicherweise ein das Sattelstützrohr tragende Sattelrohr, ein Oberrohr sowie ein Tretlagergehäuse auf. Ein mit dem Tretlagerhäuser verbundenes Unterrohr ist als Tragelement ausgebildet und mit dem Gabelelement verbunden. Das Tragelement dient zum Tragen bzw. zur Aufnahme des Lastenaufnahmebehälters. Ferner ist mit dem Oberrohr üblicherweise ein Lenkerrohr verbunden, in dem ein mit dem Lenker verbundenes Rohr schwenkbar angeordnet ist. Über einen Seilzug oder dergleichen ist dieses mit dem Gabelelement zum Lenken des üblicherweise einen Vorderrads verbunden. Da bei derartigen Lastenrädern der Fahrradsattel, wie auch bei herkömmlichen Rädern, nahe des Hinterrades oder gegebenenfalls sogar oberhalb des Hinterrades angeordnet ist und das Lastenrad einem großen Radstand aufweist, besteht die Problematik, dass das Vorderrad beispielsweise bei Bodenwellen sowie einer Bordsteinkante oder dergleichen leicht vom Boden abhebt. Der Verlust des Bodenkontaktes ist äußerst nachteilig, da hierdurch die Steuerbarkeit des Fahrrades verloren geht. Eine geringe Aufstandskraft des Vorderrads stellt somit ein erhebliches Sicherheitsrisiko dar.

Die Publikation XP055677684, "Lastenräder ", Seite 23 von Christian Kaufman offenbart die Merkmale des Oberbegriffes des Anspruchs 1.

Aufgabe der Erfindung ist es die Sicherheit von Lastenfahrrädern zu erhöhen.

Die Lösung der Aufgabe erfolgt erfindungsgemäß durch ein Lastenfahrrad mit den Merkmalen des Anspruchs 1.

Das erfindungsgemäße Lastenfahrrad, bei dem es sich in besonders bevorzugter Ausführungsform um ein einspuriges Lastenfahrrad handelt, weist einen Fahrradrahmen auf. Dieser ist mit einem zumindest ein Hinterrad tragenden Hinterbau und einem zumindest ein Vorderrad tragenden Gabelelement verbunden. Ferner weist der Fahrradrahmen ein Tragelement auf, das zur Aufnahme eines Lastenaufnahmebehälters dient. Der Fahrradrahmen weist ferner ein Lenkerrohr auf, das den Lenker bzw. ein mit dem Lenker verbundenes Rohrelement aufnimmt. Der Lastenaufnahmebehälter ist bei dem erfindungsgemäßen Lastenfahrrad zwischen dem Lenker bzw. dem Lenkerrohr des Fahrradrahmens und dem Gabelelement angeordnet. Des Weiteren weist das erfindungsgemäße Lastenfahrrad eine Batterie auf. Diese dient insbesondere zur Bereitstellung von Energie für die Antriebsunterstützung. Die Batterie wird von dem Fahrradrahmen getragen.

Erfindungsgemäß weist das Tragelement zwei im Wesentlichen horizontal verlaufende Rahmenelemente auf. Diese sind wiederum in bevorzugter Ausführungsform in einem Abstand zueinander angeordnet. Hierdurch wird die Stabilität des Rahmens verbessert und die Verbindung zwischen dem Tragelement und dem Lastenaufnahmebehälter ist vereinfacht. Auch ist eine gute Kraftübertragung gewährleistet.

Die Batterie ist erfindungsgemäß zwischen den beiden horizontal verlaufenden Rahmenelementen angeordnet. Auch hierdurch kann eine Erhöhung der Aufstandslast des Vorderrads erzielt werden. Ferner weist die Anordnung der Batterie in diesem Bereich den Vorteil auf, dass die Batterie hier bei einem Sturz geschützt ist. Ungeachtet dessen ist es möglich, zusätzlich eine nachfolgend beschriebene Batterie nahe dem Vorderrad vorzusehen.

Die Zusatzbatterie kann nahe des zumindest einen Vorderrades angeordnet sein bzw. in einem Bereich mit dem Fahrradrahmen verbunden ist, der sich nahe des Vorderrads bzw. des Gabelelements befindet. Die aus technischen Gründen ein relativ hohes Gewicht aufweisende Batterie erhöht somit die Aufstandslast des Vorderrades. Die Gefahr des Abhebens des Vorderrads vom Untergrund beispielweise beim Überfahren einer Bodenwelle, eines Randsteins oder dergleichen ist somit deutlich verringert.

Vorzugsweise ist ein Abstand zwischen dem Vorderrad und der Batterie kleiner als 50 Zentimeter, insbesondere kleiner als 30 Zentimeter und besonders bevorzugt kleiner als 20 Zentimeter. Hierbei handelt es sich vorzugsweise um den horizontalen Abstand zwischen einem Schwerpunkt der Batterie und einem Aufstandspunkt des Vorderrades. Aufstandspunkt des Vorderrades ist derjenige Punkt, in dem das Vorderrad bei Geradeausfahrt mit dem Boden in Kontakt ist.

In einer weiteren bevorzugten Ausführungsform ist die Zusatz-Batterie derart angeordnet, dass sie in Seitenansicht des Lastenfahrrads teilweise oberhalb des Vorderrads angeordnet ist. Besonders bevorzugt ist es, generell und insbesondere bei dieser Anordnung der Fahrradbatterie, dass eine Längsachse der Batterie steigend angeordnet ist. Eine insbesondere im Wesentlichen quaderförmige Batterie ist somit vorzugsweise geneigt angeordnet. Insbesondere erfolgt die Neigung der Batterie bzw. eine Mittellinie der Batterie in Fahrtrichtung und weist eine Neigung im Bereich von 30 bis 60 Grad auf.

Besonders bevorzugt ist es, dass die Zusatzbatterie mit dem Tragelement des Fahrradrahmens verbunden ist. Bevorzugt ist es des Weiteren, dass das Tragelement zumindest in dem Bereich, in dem die Zusatzbatterie angeordnet ist, zwei Rahmenelemente aufweist. Die beiden Rahmenelemente sind vorzugsweise derart ausgebildet bzw. angeordnet, dass sie einen Abstand zueinander aufweisen, so dass die Batterie in besonders bevorzugter Ausführungsform zwischen den beiden Rahmenelementen angeordnet werden kann. Dies hat insbesondere auch den Vorteil, dass die Batterie insbesondere seitlich geschützt ist. Ferner ist es hierdurch möglich, die Batterie möglichst tief und vorzugsweise nahe am Vorderrad anzuordnen. Hierdurch ist die Aufstandslast des Vorderrads weiter erhöht.

Sofern eine Batterie als Zusatzbatterie beschrieben ist, kann es sich hierbei auch stets um die einzige bzw. Haupt-Batterie handeln, die zwischen den beiden horizontal verlaufenden Rahmenelementen angeordnet ist. Des Weiteren kann die Batterie oder auch die Zusatzbatterie stets aus mehreren einzelnen Batterieelementen hergestellt sein.

Bevorzugt ist es ferner, dass die Batterie und/oder die Zusatzbatterie von einem mit dem Tragelement verbundenen Lastenaufnahmebehälter verdeckt ist. Hierdurch ist die Batterie nicht nur geschützt, sondern insbesondere auch vor Diebstahl gesichert. Gegebenenfalls sind in den entsprechenden Bereichen des Lastenaufnahmebehälters Öffnungen vorgesehen, um Kabel zum Laden der Batterie und/oder der Zusatzbatterie anzuschließen.

Bei einer bevorzugten Weiterbildung der Erfindung ist die Batterie und/oder die Zusatzbatterie über elastische Halteelemente mit dem Fahrradrahmen insbesondere dem Trägerelement verbunden. Durch eine derartige elastische Halterung ist in gewissen Grenzen ein Bewegen bzw. Schwingen der Batterie bzw. der Zusatzbatterie möglich. Hierdurch kann die Batterie bzw. die Zusatzbatterie als Schwingungsdämpfer genutzt werden. Insbesondere ist es durch das Vorsehen von elastischen Halterungen zur Verbindung der Batterie mit den Trägerelementen möglich, die Batterie möglichst vibrationsarm zu betreiben.

Bei einer bevorzugten Weiterbildung der Erfindung ist die Batterie und/oder die Zusatzbatterie innerhalb eines Gehäuses angeordnet. Hierdurch ist die Batterie zusätzlich geschützt. Auch kann z.B. bei Explosion die Umgebung vor Batterieteilen geschützt werden. Des Weiteren ist es möglich, dass das Gehäuse derart ausgebildet ist, dass es zur Aufnahme mehrerer, gegebenenfalls unterschiedlich großer Batterien geeignet ist. Hierbei ist es bevorzugt, dass innerhalb des Gehäuses zumindest eine, insbesondere mehrere Batteriehalterungen vorgesehen sind. Vorzugsweise ist das Bohrbild in dem Gehäuse so, dass die Batteriehalter an unterschiedlichen Positionen befestigt werden können, um unterschiedlich große Batterien aufnehmen zu können. Die mindestens eine Batteriehalterung dient zur Fixierung der mindestens einen in dem Gehäuse angeordneten Batterie. Vorzugsweise ist das Gehäuse derart ausgebildet, dass es einen Deckel aufweist, so dass die mindestens eine Batterie auf einfache Weise zugänglich ist. Der Deckel verschließt das Gehäuse vorzugsweise dichtend, wobei eine entsprechende Dichtung vorgesehen sein kann, um das Eindringen von Feuchtigkeit zu vermeiden. Da der Deckel außen über das Gehäuse überlappt, kann zumindest von oben kein Wasser eindringen. Die Dichtung hat ferner die Funktion den Deckel 'klapperfrei' auf dem Gehäuse zu halten. Innerhalb des Gehäuses sind vorzugsweise unmittelbar Batterieanschlüsse vorgesehen, so dass durch Einsetzen der Batterie in das Gehäuse, beispielsweise durch eine einfache Steckverbindung unmittelbar eine elektrische Verbindung gewährleistet ist. Ferner ist es bevorzugt, dass insbesondere an einem Gehäuseboden eine Ablauföffnung vorgesehen ist, um gegebenenfalls innerhalb des Gehäuses vorhandene Feuchtigkeit unmittelbar abzuführen. Die insbesondere im Gehäuseboden vorgesehene Ablauföffnung ist hierbei vorzugsweise derart ausgebildet, dass kein Spritzwasser durch die Ablauföffnung in das Gehäuse eindringen kann. Entsprechend ist in bevorzugter Ausführungsform ein Spritzschutz oder dergleichen vorgesehen.

Des Weiteren ist es bevorzugt, dass die Batterie und/oder die Zusatzbatterie von einem Wärme-Abfuhrelement zumindest teilweise umgeben ist. Ein derartiges, insbesondere aus Metall hergestelltes Wärme-Abfuhrelement kann thermisch leitend mit dem Fahrradrahmen verbunden sein. Hierdurch ist auf einfache Weise eine Überhitzung der Batterien vermieden. Vorzugsweise handelt es sich bei dem Wärme-Abfuhrelement um eine Box oder in bevorzugter Weiterbildung das vorstehend beschriebene Gehäuse, das die Batterie und/oder die Zusatzbatterie vorzugsweise vollständig umgibt. Die Wärmeabfuhr erfolgt somit einerseits bereits über das als Gehäuse ausgebildete Wärmeabfuhrelement und sodann gegebenenfalls zusätzlich über den Fahrradrahmen, wobei dies nicht unbedingt erforderlich ist. Insbesondere beim Befestigen der Batterie und/oder der Zusatzbatterie an Tragelementen ist es bevorzugt, dass die Befestigung über das Gehäuse bzw. das Wärme-Abfuhrelement erfolgt.

Des Weiteren ist es bevorzugt, dass in dem Gehäuse Brandschutzmaterial vorgesehen ist. Geeignet ist zum Beispiel das unter dem Produktnamen Pyro Bubbles vertriebene Material. Zusätzlich oder alternativ kann das Gehäuse zumindest teilweise mit Brandschutzmaterial umgeben sein.

Die in bevorzugter Weiterbildung vorgesehenen elastischen Halteelemente, die zur Aufnahme der Batterie und/oder der Zusatzbatterie vorgesehen sein können, sind vorzugsweise zwischen dem Gehäuse und dem Fahrradrahmen, insbesondere dem Tragelement des Fahrradrahmens angeordnet. Die elastischen Halteelemente fixieren somit das die mindestens eine Batterie aufnehmende Gehäuse elastisch am Fahrradrahmen. Hierbei kann es sich bei den elastischen Halteelementen um Elastomerkörper und/oder Federelemente oder dergleichen handeln, um insbesondere Vibrationen zu dämpfen und/oder das Gehäuse zusammen mit der mindestens einen Batterie als Schwingungsdämpfer zu nutzen.

Zusätzlich oder alternativ kann die Batterie innerhalb des Gehäuses von elastischen Halteelementen gehalten sein. Die Halteelemente sind somit insbesondere unmittelbar mit der mindestens einen Batterie verbunden und an einer Innenseite des Gehäuses angeordnet.

Zur weiteren Verbesserung der Aufstandslast des Vorderrades ist es bevorzugt, dass der Schwerpunkt des Lastenfahrrads vorzugsweise einschließlich eines auf dem Sattel sitzenden Benutzers, jedoch vorzugsweise ohne zusätzliche Lasten unterhalb einer Schwerpunktlinie angeordnet ist. Die Schwerpunktlinie verläuft ausgehend von dem Aufstandspunkt des Vorderrads in Richtung des Hinterrads in einem Winkel von 45 Grad zur Horizontalen.

Nachfolgend wird die Erfindung anhand einer bevorzugten Ausführungsform unter Bezugnahme auf den anliegenden Zeichnungen näher erläutert.

Es zeigen:
- Fig. 1: eine perspektivische Seitenansicht einer ersten bevorzugten Ausführungsform,
- Fig. 2: eine perspektivische Ansicht von oben einer zweiten bevorzugten Ausführungsform des Lastenfahrrads und
- Fig. 3: eine schematische Schnittansicht durch ein Batteriegehäuse.

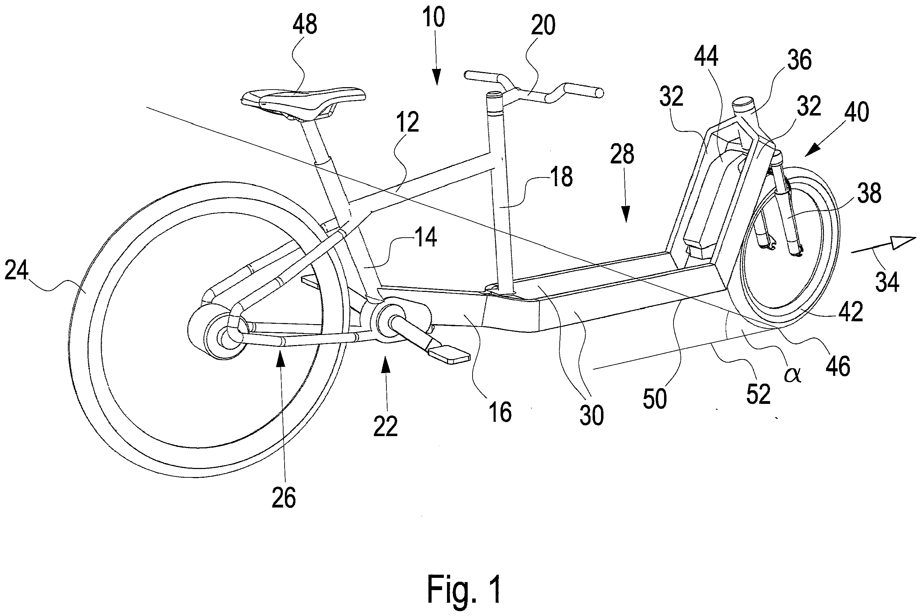

Eine bevorzugte Ausführungsform des erfindungsgemäßen Lastenfahrrads wie in Figur 1 dargestellt weist einen Fahrradrahmen 10 auf. Der Fahrradrahmen 10 weist im dargestellten Ausführungsbeispiel ein Oberrohr 12, ein Sattelrohr 14, ein Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen üblichen hier nicht dargestellten Antrieb mittels Kette, Zahnriemen oder dergleichen. Ferner weist der Fahrradrahmen 10 einen Hinterbau 26 auf, der das Hinterrad 24 trägt. In dem dargestellten Ausführungsbeispiel ist ein einspuriges Lastenfahrrad dargestellt, wobei der Hinterbau 26 auch derart ausgebildet sein kann, dass dieser zwei Hinterräder trägt.

Ferner weist der Fahrradrahmen 10 ein Tragelement 28 auf. Das Tragelement 28 weist im dargestellten Ausführungsbeispiel zwei horizontale Rahmenelemente 30 auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Rahmenelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

In einem geringen Abstand zum Vorderrad 42 ist eine Batterie 44 mit dem Tragelement 28 verbunden. Im dargestellten Ausführungsbeispiel ist die Batterie 44 zwischen den beiden Rahmenelementen 32 des Tragelements angeordnet. Eine Längsachse der im Wesentlichen quaderförmigen Batterie 44 verläuft geneigt bzw. in Fahrtrichtung 34 steigend. Insofern überdeckt in Seitenansicht ein Teil der Batterie 44 das Vorderrad und erhöht die Aufstandslast des Vorderrads auf einen Aufstandspunkt 46.

Durch eine derartige bevorzugte Anordnung der Batterie 44 kann ein Schwerpunkt des Lastenfahrrads insbesondere zusammen mit einem auf einem Sattel 48 sitzenden Benutzer derart angeordnet werden, dass sich dieser unterhalb einer Schwerpunktlinie 50 befindet. Die Schwerpunktlinie 50 verläuft zu einem Winkel o=45 Grad zu einer Horizontalen 52 und geht von dem Aufstandspunkt 46 aus, wobei die Schwerpunktlinie 50 entgegen der Fahrtrichtung 34 verläuft.

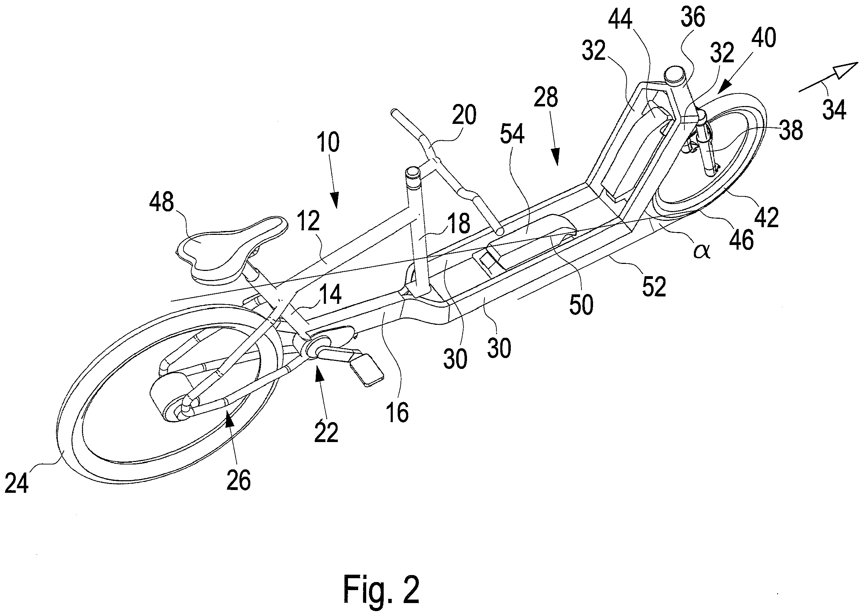

Bei dem in Figur 2 dargestellten Lastenfahrrad handelt es sich um das entsprechende in Figur 1 dargestellte Lastenfahrrad, wobei zusätzlich eine Zusatzbatterie 54 vorgesehen ist. Die Zusatzbatterie 54 ist im dargestellten Ausführungsbeispiel zwischen den beiden horizontalen Rahmenelementen 30 des Tragelementes 28 angeordnet.

Bei der Zusatzbatterie 54 kann es sich gemäß der Erfindung auch um die einzige Batterie handeln, so dass bei einer alternativen Ausführungsform eine Batterie, bzw. eine Haupt-Batterie entsprechend der Zusatzbatterie 54 zwischen den beiden horizontalen Rahmenelementen 30 angeordnet ist. Selbstverständlich kann auch bei dieser Ausführungsform eine weitere Batterie entsprechend der Batterie 44 vorgesehen sein. Das Vorsehen einer Batterie 54 im Bereich zwischen den beiden horizontalen Rahmenelementen ist für viele Anwendungen ausreichend, insbesondere wenn eine Batterie mit mehreren Einzelbatterieelementen vorgesehen wird. Die Anordnung der Batterie in nur diesem Bereich hat den Vorteil, dass ein sehr tiefer Schwerpunkt realisiert werden kann, wobei zusätzlich eine ausreichende Auflagekraft für das Vorderrad gewährleistet ist.

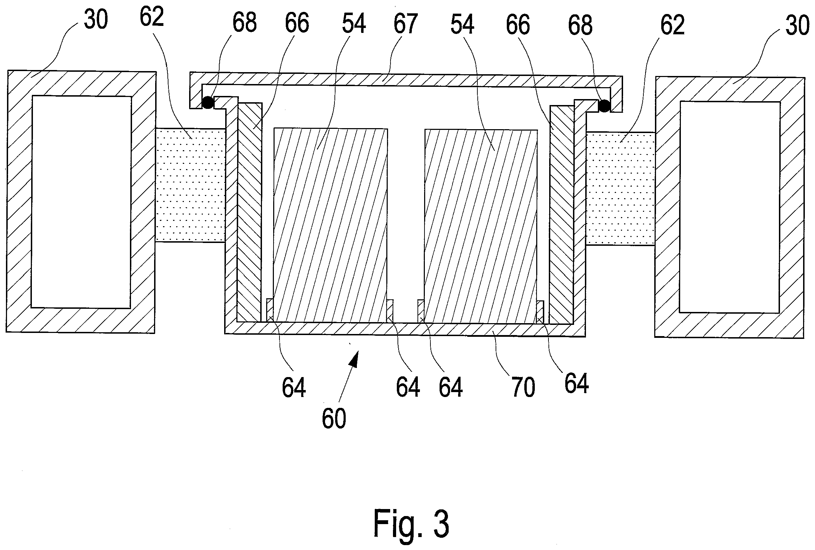

In Figur 3 ist schematisch im Querschnitt ein Batteriegehäuse 60 dargestellt. Dieses ist zwischen den beiden Rahmenelementen 30 angeordnet, kann jedoch auch beispielsweise zwischen den beiden Rahmenelementen 32 angeordnet sein. Das Gehäuse 60 ist im dargestellten Ausführungsbeispiel mit den Rahmenelementen 30 über elastische Halteelemente 62 verbunden. Aufgrund des Vorsehens der elastischen Verbindung des Gehäuses 60 mit den Rahmenelementen 30 ist ein Bewegen bzw. Schwingen des Gehäuses 60 möglich. Innerhalb des Gehäuses 60 sind in dem in Figur 3 dargestellten Ausführungsbeispiel zwei Batterien 54 angeordnet. Die beiden Batterien können über schematisch dargestellte Batteriehalterungen 64 in dem Gehäuse 60 fixiert bzw. gehalten werden. Ferner sind elektrische Anschlüsse für die Batterien 54 in dem Gehäuse 60 vorgesehen, die jedoch nicht dargestellt sind.

Des Weiteren ist es möglich, innerhalb des Gehäuses 60 Brandschutzmaterial, das im dargestellten Ausführungsbeispiel als Brandschutzplatten 66 ausgebildet ist, vorzusehen. Entsprechendes Brandschutzmaterial kann beispielsweise auch in anderen Bereichen des Gehäuses oder auch außen am Gehäuse vorgesehen sein.

Das Gehäuse 60 ist im dargestellten Ausführungsbeispiel mit einem Deckel 67 verschlossen. Um ein Eindringen von Feuchtigkeit zu vermeiden, ist zusätzlich eine Dichtung 68 vorgesehen.

Des Weiteren kann ein Gehäuseboden 70 eine nicht dargestellte Ablauföffnung zur Abfuhr von Feuchtigkeit aus dem Gehäuse aufweisen, wobei die Ablauföffnung vorzugsweise eine Abdeckung aufweist oder entsprechend abgewinkelt ausgebildet ist, um das Eindringen von Spritzwasser durch die Ablauföffnung in das Gehäuse 60 zu vermeiden.

Des Weiteren kann ein Gehäuseboden 70 eine nicht dargestellte Ablauföffnung zur Abfuhr von Feuchtigkeit aus dem Gehäuse aufweisen, wobei die Ablauföffnung vorzugsweise eine Abdeckung aufweist oder entsprechend abgewinkelt ausgebildet ist, um das Eindringen von Spritzwasser durch die Ablauföffnung in das Gehäuse 60 zu vermeiden.

## Patentansprüche

1. Lastenfahrrad mit
einem Fahrradrahmen (10), der mit einem zumindest ein Hinterrad (24) tragenden Hinterbau (26) und einem zumindest ein Vorderrad (42) tragenden Gabelelement (40) verbunden ist,
wobei der Fahrradrahmen (10) ein Tragelement (28) zur Aufnahme eines Lastenaufnahmebehälters aufweist, der zwischen einem Lenkerrohr (18) und dem Gabelelement (40) angeordnet ist und einer von dem Fahrradrahmen (10) getragenen Batterie (54),
und das Trageelement (28) zwei im Wesentlichen horizontal verlaufende Rahmenelemente (30) aufweist, **dadurch gekennzeichnet, dass** die Batterie (54) ausschließlich zwischen den zwei Rahmenelementen (30) angeordnet ist.

2. Lastenfahrrad nach Anspruch 1, **dadurch gekennzeichnet, dass** die Batterie (54) mehrere Einzelbatterieelemente aufweist.

3. Lastenfahrrad nach Anspruch 1 oder 2, **dadurch gekennzeichnet, dass** die Batterie (54) mit dem Tragelement (28) des Fahrradrahmens (10) verbunden ist.

4. Lastenfahrrad nach einem der Ansprüche 1 - 3, **dadurch gekennzeichnet, dass** die Batterie (54) von einem mit dem Tragelement (28) verbundenen Aufnahmebehälter verdeckt ist.

5. Lastenfahrrad nach einem der Ansprüche 1 - 4, **dadurch gekennzeichnet, dass** die Batterie (54) über elastische Halteelemente (62) mit dem Fahrradrahmen (10) insbesondere dem Tragelement (28) des Fahrradrahmens (10) verbunden ist.

6. Lastenfahrrad nach einem der Ansprüche 1 - 5, **dadurch gekennzeichnet, dass** der Schwerpunkt des Lastenfahrrads, vorzugsweise einschließlich eines Benutzers unterhalb einer Schwerpunktlinie angeordnet ist, die ausgehend von einem Aufstandspunkt (46) des Vorderrads (42) in einem Winkel von 45 Grad in Richtung des Hinterrads (24) verläuft.

7. Lastenfahrrad nach einem der Ansprüche 1 - 6, **dadurch gekennzeichnet, dass** die Batterie (54) innerhalb eines Gehäuses (60) angeordnet ist.

8. Lastenfahrrad nach Anspruch 7, **dadurch gekennzeichnet, dass** das Gehäuse (60) zur Aufnahme mehrerer, insbesondere unterschiedlich großer Batterien (54) ausgebildet ist.

9. Lastenfahrrad nach Anspruch 7 oder 8, **dadurch gekennzeichnet, dass** das Gehäuse (60) zumindest eine, insbesondere mehrere Batteriehalterungen (64) zur Fixierung zumindest einer Batterie (44, 54) in dem Gehäuse (60) aufweist.

10. Lastenfahrrad nach einem der Ansprüche 7 - 9, **dadurch gekennzeichnet, dass** das Gehäuse (60) einen das Gehäuse insbesondere dicht verschließenden Deckel (68) aufweist.

11. Lastenfahrrad nach einem der Ansprüche 7 - 10, **dadurch gekennzeichnet, dass** insbesondere in einem Gehäuseboden (70) des Gehäuses (60) eine Ablauföffnung vorgesehen ist.

12. Lastenfahrrad nach einem der Ansprüche 1 - 11, **dadurch gekennzeichnet, dass** die Batterie (54) von einem Wärme-Abführelement zumindest teilweise umgeben ist, wobei vorzugsweise das Gehäuse (60) als Wärme-Abführelement ausgebildet ist.

13. Lastenfahrrad nach einem der Ansprüche 7 - 12, **dadurch gekennzeichnet, dass** in dem Gehäuse Brandschutzmaterial (66) vorgesehen ist und/oder das Gehäuse (60) zumindest teilweise von Brandschutzmaterial umgeben ist.

14. Lastenfahrrad nach einem der Ansprüche 5 - 13, **dadurch gekennzeichnet, dass** die elastischen Halteelemente (62) zwischen dem Gehäuse (60) und dem Fahrradrahmen insbesondere den Rahmenelementen (30, 32) angeordnet sind.

15. Lastenfahrrad nach einem der Ansprüche 5 - 14, **dadurch gekennzeichnet, dass** elastische Halteelemente in dem Gehäuse (60) zwischen der Batterie (54) und dem Gehäuse (60) angeordnet sind.

## Claims

1. A cargo bike comprising
a bicycle frame (10) connected with a chainstay (26) supporting at least one rear wheel (24) and with a fork element (40) supporting at least one front wheel (42),
wherein the bicycle frame (10) comprises a support element (28) for receiving a cargo receiving container arranged between a handlebar tube (18) and the fork element (40), and
a battery (54) supported by the bicycle frame (10), and
wherein the support element (28) comprises two substantially horizontal frame elements (30),
**characterized in that**
the battery (54) is exclusively arranged between the two frame elements (30).

2. The cargo bike according to claim 1, **characterized in that** the battery (54) has several individual battery elements.

3. The cargo bike according to claim 1 or 2, **characterized in that** the battery (54) in connected with the support element (28) of the bicycle frame (10).

4. The cargo bike according to any one of claims 1-3, **characterized in that** the battery (54) is covered by a receiving container connected with the support element (28).

5. The cargo bike according to any one of claims 1-4, **characterized in that** the battery (54) is connected via elastic support elements (62) with the bicycle frame (10), in particular the support element (28) of the bicycle frame (10).

6. The cargo bike according to any one of claims 1-5, **characterized in that** the center of gravity of the cargo bike, preferably including a user, is arranged below a center-of-gravity line extending from a point of contact (46) of the front wheel (42) at an angle of 45 degrees toward the rear wheel (24).

7. The cargo bike according to any one of claims 1-6, **characterized in that** the additional battery (54) is arranged inside a housing (60).

8. The cargo bike according to claim 7, **characterized in that** the housing (60) is configured to receive batteries (54), in particular of different sizes.

9. The cargo bike according to claim 7 or 8, **characterized in that** the housing (60) comprises at least one, in particular several battery holders (64) for fixing at least one battery (44, 54) inside the housing (60).

10. The cargo bike according to any one of claims 7-9, **characterized in that** the housing (60) comprises a lid (68) that closes the housing, in particular tightly.

11. The cargo bike according to any one of claims 7-10, **characterized in that** a discharge opening is provided in particular in a housing bottom (70) of the housing (60).

12. The cargo bike according to any one of claims 1-11, **characterized in that** the battery (54) is at least partially surrounded by a heat dissipation element, wherein preferably the housing (60) is formed as a heat dissipation element.

13. The cargo bike according to any one of claims 7-12, **characterized in that** a fire protection material (66) is provided inside the housing, and/or that the housing (60) is at least partially surrounded by fire protection material.

14. The cargo bike according to any one of claims 5-13, **characterized in that** the elastic support elements (62) are arranged between the housing (60) and the bicycle frame, in particular the frame elements (30, 32).

15. The cargo bike according to any one of claims 5-14, **characterized in that** the elastic support elements are arranged inside the housing (60) between the battery (54) and the housing (60).

## Revendications

1. Bicyclette de transport dotée
d'un cadre de bicyclette (10), lequel est relié à une structure arrière (26) portant au moins une roue arrière (24) et à un élément de fourche (40) portant au moins une roue avant (42),
dans laquelle le cadre de bicyclette (10) comporte un élément porteur (28) destiné à accueillir un contenant d'accueil de charge, lequel est disposé entre un tube de guidon (18) et l'élément de fourche (40) et
d'une batterie (54) portée par le cadre de bicyclette (10),
et l'élément porteur (28) comporte deux éléments de cadre (30) sensiblement horizontaux, **caractérisée en ce que** la batterie (54) est disposée exclusivement entre les deux éléments de cadre (30).

2. Bicyclette de transport selon la revendication 1, **caractérisée en ce que** la batterie (54) comporte éléments individuels de batterie.

3. Bicyclette de transport selon la revendication 1 ou 2, **caractérisée en ce que** la batterie (54) est reliée à l'élément porteur (28) du cadre de bicyclette (10).

4. Bicyclette de transport selon l'une des revendications 1-3, **caractérisée en ce que** la batterie (54) est recouverte par un contenant d'accueil relié à l'élément porteur (28).

5. Bicyclette de transport selon l'une des revendications 1-4, **caractérisée en ce que** la batterie (54) est reliée au cadre de bicyclette (10), en particulier à l'élément porteur (28) du cadre de bicyclette (10), par le biais d'éléments de maintien élastiques (62).

6. Bicyclette de transport selon l'une des revendications 1-5, **caractérisée en ce que** le centre de gravité de la bicyclette de transport, de préférence y compris un utilisateur, est disposé en-dessous d'une ligne de centre de gravité partant avec un angle de 45 degrés d'un point de contact au sol (46) de la roue avant (42) en direction de la roue arrière (24).

7. Bicyclette de transport selon l'une des revendications 1-6, **caractérisée en ce que** la batterie (54) est disposée à l'intérieur d'un boîtier (60).

8. Bicyclette de transport selon la revendication 7, **caractérisée en ce que** le boîtier (60) est réalisé pour l'accueil de plusieurs batteries (54), en particulier de différentes tailles.

9. Bicyclette de transport selon la revendication 7 ou 8, **caractérisée en ce que** le boîtier (60) comporte au moins un, en particulier plusieurs maintiens de batterie (64) pour fixer au moins une batterie (44, 54) dans le boîtier (60).

10. Bicyclette de transport selon l'une des revendications 7-9, **caractérisée en ce que** le boîtier (60) comporte un couvercle (68) fermant le boîtier en particulier de manière étanche.

11. Bicyclette de transport selon l'une des revendications 7-10, **caractérisée en ce qu'**une ouverture d'évacuation est prévue en particulier dans un fond de boîtier (70) du boîtier (60).

12. Bicyclette de transport selon l'une des revendications 1-11, **caractérisée en ce que** la batterie (54) est entourée au moins partiellement par un élément dissipateur thermique, dans laquelle de préférence le boîtier (60) est réalisé comme élément dissipateur thermique.

13. Bicyclette de transport selon l'une des revendications 7-12, **caractérisée en ce que** dans le boîtier est prévu un matériau ignifuge (66) et/ou le boîtier (60) est au moins partiellement entouré de matériau ignifuge.

14. Bicyclette de transport selon l'une des revendications 5-13, **caractérisée en ce que** les éléments de maintien élastiques (62) sont disposés entre le boîtier (60) et le cadre de bicyclette, en particulier les éléments de cadre (30, 32).

15. Bicyclette de transport selon l'une des revendications 5-14, **caractérisée en ce que** des éléments de maintien élastiques sont disposés dans le boîtier (60) entre la batterie (54) et le boîtier (60).
